# EUROPÄISCHE PATENTSCHRIFT

(11) **EP 2 065 177 B1**
(45) Veröffentlichungstag und Bekanntmachung des Hinweises auf die Patenterteilung: **18.08.2010**
(21) Anmeldenummer: 07405341.4
(22) Anmeldetag: 30.11.2007
(51) Int. Cl.: B30B 15/00, B32B 37/00

(54) **Heizplatte mit Hubelementen**
Hotplate with lifting element
Plaque chauffante dotée d'éléments de levage

(43) Veröffentlichungstag der Anmeldung: 03.06.2009
(73) Patentinhaber: Komax Holding AG, 6036 Dierikon (CH)
(72) Erfinder: Reichmuth, Bruno, 8844 Euthal (CH); Meisser, Claudio, 6330 Cham (CH)
(74) Vertreter: EGLI-EUROPEAN PATENT ATTORNEYS

(56) Entgegenhaltungen:
- EP-A- 1 550 548
- EP-A- 1 609 597

## Beschreibung

Die Erfindung bezieht sich auf eine Heizplatte mit Hubelementen zum Anheben eines mit der Heizplatte zu erwärmenden Werkstücks relativ zur Heizplatte.

Heizplatten dieser Art werden insbesondere in Laminierpressen zur Herstellung von photovoltaischen Modulen eingesetzt.

Beim Laminieren verbindet sich eine dünne, meist folienartige Schicht mit einem Trägermaterial. In vielen Fällen, beispielsweise bei der Herstellung von photovoltaischen Modulen, ist es notwendig, den Laminierprozess bei erhöhten Temperaturen durchzuführen (Heisslaminieren). Dabei wird in der Regel das zu verarbeitende Werkstück (d. h. das mit der zu verbindenden Schicht bedeckte Trägermaterial) auf der Auflagefläche einer Heizplatte auf eine vorgegebene Temperatur erwärmt und anschliessend gepresst.

Für den Laminierprozess ist es wichtig, dass die Temperaturverteilung an der Auflagefläche der Heizplatte möglichst gleichmässig ist. Weiterhin muss die Wärmezufuhr temporär unterbrochen werden können, was beispielsweise durch Anheben des Werkstückes relativ zur Auflagefläche erreicht werden kann. Bei einigen Anwendungen wird der Laminierprozess in einem Vakuum durchgeführt. Bei derartigen Anwendungen ist es zweckmässig, die Heizplatte in einer evakuierbaren Kammer anzuordnen und zu betreiben.

Aus EP 0 678 357 A1 ist beispielsweise eine Laminierpresse mit einer in einer evakuierbaren Kammer angeordneten Heizplatte bekannt. Die Heizplatte umfasst eine Vielzahl von Hubelementen, die jeweils in einem vertikalen Führungsloch in einer heizbaren Platte angeordnet sind und aus dem jeweiligen Führungsloch über eine Auflagefläche der Platte hinaus ausfahrbar sind, um ein Werkstück bezüglich der Auflagefläche anheben zu können. Die jeweiligen Hubelemente können mittels pneumatisch betätigbaren Kolben ausgefahren werden, welche in Zylindern angeordnet sind, die sich im Innern der Platte unterhalb der Auflagefläche erstrecken. Zum Betätigen des jeweiligen Kolbens wird der Druckunterschied zwischen der evakuierbaren Kammer und der Umgebung ausgenutzt, wobei alle Hubelemente, die von dem jeweiligen Werkstück bedeckt sind, automatisch angehoben werden, wenn ein Vakuum in der Kammer erzeugt wird. Diese Heizplatte hat eine Reihe von Nachteilen. Die Herstellung der Heizplatte ist wegen der vielen Zylinder, die im Innern der Platte für die Kolben geschaffen werden müssen, aufwändig. Weiterhin sorgen die Vielzahl der Zylinder und die Luftströmungen, die beim Betätigen der Zylinder entstehen, für eine ungleichmässige Temperaturverteilung im Bereich der Auflagefläche. Ausserdem ist das Anheben des Werkstücks an die Herstellung eines Vakuums in der Kammer gebunden. Die Zeit, die zum Erwärmen eines Werkstücks zur Verfügung steht, kann somit nicht unabhängig von der Herstellung des Vakuums und somit nicht frei gewählt werden. Ein weiterer Nachteil ist darin zu sehen, dass die pneumatische Betätigung der Kolben ein simultanes Anheben der Hubelemente erschwert. Um ein simultanes Anheben der Hubelemente zu erzwingen, können die Hubelemente und Kolben miteinander verbunden werden. Dadurch würde die Herstellung der Heizplatte noch aufwändiger.

Aus EP 1 550 548 A1 ist eine weitere Laminierpresse mit einer in einer evakuierbaren Kammer angeordneten Heizplatte bekannt. Die Heizplatte ist in einem Abstand zum Boden der Kammer angeordnet und weist eine Vielzahl vertikaler Bohrungen auf. Um ein auf der Heizplatte liegendes Werkstück anheben zu können, sind eine Vielzahl von Hubvorrichtungen vorgesehen, die jeweils aus einem Bolzen und einem Antrieb für den jeweiligen Bolzen bestehen. Die Antriebe sind individuell auf dem Boden der Kammer unterhalb der Heizplatte derart angeordnet, dass die jeweiligen Bolzen durch die Bohrungen in der Heizplatte führbar bzw. ausfahrbar sind. Als Antriebe sind beispielsweise pneumatische Zylinder oder mechanische Antriebe vorgesehen. Auch diese Anordnung von Heizplatte und Hubvorrichtungen ist mit mehreren Nachteilen verbunden. Einerseits sind wegen der Vielzahl der Antriebe aufwändige Massnahmen notwendig, um die Antriebe im Vakuum betreiben und steuern zu können, insbesondere Massnahmen zum Abdichten der Antriebe und der Kammer. Weiterhin ist die Montage der Hubvorrichtungen und der Heizplatte aufwändig, insbesondere im Falle von relativ grossen Platten und einer grossen Anzahl von Hubvorrichtungen. Zusätzlich ist die Wartung der Antriebe erschwert, zumal sie unterhalb der Platte nicht leicht zugänglich sind. Weiterhin ist ein simultanes Ausfahren aller Bolzen wegen der Vielzahl der Antriebe mit erheblichem Aufwand verbunden, zumal alle Antriebe synchronisiert werden müssen.

Der vorliegenden Erfindung liegt die Aufgabe zugrunde, die genannten Nachteile zu vermeiden und eine Heizplatte zu schaffen, die es ermöglicht, eine möglichst gleichmässige Temperaturverteilung im Bereich einer Auflagefläche der Heizplatte zu schaffen und ein auf der Heizplatte abgelegtes Werkstück bezüglich aller Bereiche des Werkstücks, die mit der Heizplatte in Kontakt stehen, mit einfachen Mitteln simultan anzuheben.

Diese Aufgabe wird gelöst durch eine Heizplatte mit den Merkmalen des Patentanspruchs 1.

Die Heizplatte umfasst: Eine heizbare Platte, welche auf einer ersten Seite eine Auflagefläche für ein Werkstück aufweist; mehrere Hubelemente zum Anheben des Werkstücks relativ zur Auflagefläche, wobei jedes Hubelement derart beweglich angeordnet ist, dass das jeweilige Hubelement bezüglich der Auflagefläche versenkbar und/oder bezüglich der Auflagefläche ausfahrbar ist; und Mittel zum Heizen der Platte.

Gemäss der Erfindung umfassen die Mittel zum Heizen der Platte mindestens einen Heizkanal, welcher sich auf einer der Auflagefläche gegenüberliegenden zweiten Seite der Platte erstreckt und mit einer Heizflüssigkeit gefüllt ist, wobei die Heizflüssigkeit mit der Platte in Kontakt steht und die Hubelemente mit der Heizflüssigkeit derart beaufschlagt sind, dass die Hubelemente durch eine vorgegebene Veränderung des hydrostatischen Drucks der Heizflüssigkeit ausfahrbar sind.

Als "Heizflüssigkeit" wird in diesem Zusammenhang jede Flüssigkeit angesehen, die in der Lage ist, Wärme an die Platte abzugeben, beispielsweise eine Flüssigkeit, die mit Heizelementen erwärmt wird.

Da die Platte zumindest in der Umgebung aller Hubelemente auf der der Auflagefläche gegenüberliegenden Seite mit der Heizflüssigkeit in Kontakt steht, ist die Voraussetzung dafür gegeben, dass eine gleichmässige Erwärmung der Platte erreicht werden kann. Die Heizflüssigkeit kann gegebenenfalls im Heizkanal zirkulieren und dabei für einen Ausgleich von Temperaturschwankungen sorgen. Zur Optimierung der jeweiligen Temperaturverteilung können die Hubelemente möglichst gleichmässig über die gesamte Auflagefläche verteilt werden. Entsprechend kann der Heizkanal relativ zu den Hubelementen geeignet angeordnet werden und hinsichtlich der Grösse der Kontaktfläche zwischen der Platte und Heizflüssigkeit optimiert werden.

Da die Heizflüssigkeit (im Vergleich zu Gasen) als inkompressibel anzusehen ist, können alle Hubelemente, die mit der Heizflüssigkeit eines Heizkanals beaufschlagt sind, unabhängig von der Anzahl der Hubelemente und der Grösse der Heizplatte durch eine Änderung des hydrostatischen Drucks der Heizflüssigkeit simultan ausgefahren werden. Auf diese Weise kann ein auf der Heizplatte abgelegtes Werkstück bezüglich aller Bereiche des Werkstücks, die mit der Heizplatte in Kontakt stehen, simultan angehoben werden. Ein simultanes Ausfahren bzw. Versenken aller Hubelemente kann einfach erzielt werden, zumal lediglich ein Parameter - der hydrostatische Druck der Heizflüssigkeit - verändert werden muss. Eine geeignete Änderung des hydrostatischen Drucks ist mit einfachen Mitteln zu kontrollieren, beispielsweise mit einer konventionellen Pumpe oder durch eine mechanische Verdrängung der Heizflüssigkeit.

Bei einer Ausführungsform der erfindungsgemässen Heizplatte sind die jeweiligen Hubelemente in einem durch die Platte durchgehenden Führungsloch angeordnet, welches in den Heizkanal mündet. Das Hubelement kann einen Kolben aufweisen und so angeordnet sein, dass mindestens eine Kolbenfläche mit der Heizflüssigkeit in Kontakt steht. Bei dieser Ausführungsform kann der Kolben bzw. das Hubelement gegenüber dem jeweiligen Führungsloch, in dem das Hubelement angeordnet ist, mit einem Dichtelement abgedichtet werden.

Eine weitere Ausführungsform basiert auf auswechselbaren Modulen, die jeweils in einen durch die Platte durchgehenden Kanal eingesetzt werden können und aus einem oder mehreren Hubelementen und einer in den Kanal einsetzbaren Tragstruktur mit Führungslöchern für die jeweiligen Hubelemente bestehen. Derartige Module können so realisiert werden, dass jedes Modul als Ganzes von der Auflagefläche der Platte her austauschbar ist. Dies erleichtert die Wartung und gegebenenfalls eine Reparatur der Hubelemente und der sonstigen auswechselbaren Einzelteile.

Bei einer Weiterentwicklung dieser Ausführungsform ist vorgesehen, dass das jeweilige Hubelement einen Kolben mit einer Kolbenfläche aufweist, die mit der Heizflüssigkeit beaufschlagt ist. Der Kolben kann auch in den Heizkanal hineinragen.

Die vorstehend genannten Module vereinfachen eine Abdichtung gegenüber der Heizflüssigkeit. Der Kolben kann beispielsweise mit einem deformierbaren Dichtelement (z. B. mit einem flexiblen Balg, beispielsweise aus Metall), welches eine Verbindung zwischen dem Hubelement bzw. dem Kolben und der Tragstruktur bildet, so abgedichtet werden, dass das Führungsloch für das jeweilige Hubelement gegenüber der Heizflüssigkeit abgedichtet ist. Ein derartiges Dichtelement kann an einer Seite an der Tragstruktur ausserhalb des Führungslochs und an der anderen Seite an dem Hubelement bzw. dem Kolben befestigt werden, sodass keine Heizflüssigkeit in das Führungsloch dringen kann.

In diesem Fall ist es nicht nötig, innerhalb des Führungslochs ein Dichtelement zwischen dem Hubelement und der Wand des Führungslochs anzuordnen, derart, dass das Dichtelement bei einer Bewegung des Hubelements innerhalb des Führungslochs eine gleitende Bewegung relativ zum Hubelement oder relativ zum Führungsloch ausführen muss. Auf gleitende Dichtelemente zwischen zwei relativ zueinander bewegten Teilen, die zudem noch aufgrund der Nähe zur Heizflüssigkeit starken Temperatur- und Druckschwankungen ausgesetzt sein können, kann in diesem Fall verzichtet werden. Es ist insbesondere möglich, auf Gummidichtungen zu verzichten, welche durch grosse Temperatur- und Druckschwankungen überlastet werden können.

Das jeweilige Hubelement kann mit einem Federelement verbunden sein, welches derart vorgespannt ist, dass das Hubelement bezüglich der Auflagefläche versenkt ist, wenn der hydrostatische Druck der Heizflüssigkeit einen vorgegebenen Wert unterschreitet. Die Vorspannung des Federelements sorgt dafür, dass das Hubelement bei geringem hydrostatischen Druck versenkt ist und eine stabile Gleichgewichtslage einnehmen kann. Um das Hubelement auszufahren, ist demnach zumindest eine Kraft nötig, welche die Vorspannung des Federelements überkompensiert. Diese Konstruktion ist u. a. vorteilhaft im Hinblick auf eine Verwendung der Heizplatte in einem Vakuum. Die Vorspannung des Federelemente kann stets so gewählt werden, dass bei einem vorgegebenen Druck in der Umgebung der Heizplatte (ausserhalb des Heizkanals) das Hubelement gegenüber der Auflagefläche versenkt ist, wenn der hydrostatische Druck einen vorgegebenen Wert unterschreitet.

Die Anordnung des Heizkanals auf der Seite der Platte, die der Auflagefläche der Platte gegenüberliegt, bietet den Vorteil, dass zur Realisierung des Heizkanals keine Bohrungen durch die Platte hergestellt werden müssen. Zur Realisierung eines Heizkanals bietet sich eine zweiteilige Konstruktion an, bei welcher der Heizkanal auf einer Seite durch die Platte und auf einer anderen Seite durch eine an der Platte befestigten Wand begrenzt ist. Die jeweiligen Verbindungen zwischen der Wand und der Platte können in der Regel mit konventionellen Mitteln so realisiert werden, dass sie gegenüber der Heizflüssigkeit dicht sind. Dies erlaubt eine kostengünstige Herstellung des jeweiligen Heizkanals.

Weitere Einzelheiten der Erfindung und insbesondere beispielhafte Ausführungsformen der Erfindung werden im Folgenden anhand der beigefügten Zeichnungen erläutert. Es zeigen:
- Fig. 1: eine perspektivische Ansicht eines Ausschnitts ei- ner Ausführungsform der erfindungsgemässen Heiz- platte;
- Fig. 2: die Heizplatte gemäss Fig. 1, in einem Schnitt durch ein Hubelement, wobei das Hubelement im aus- gefahrenen Zustand dargestellt ist;
- Fig. 3: die Heizplatte gemäss Fig. 1, in einem Schnitt durch ein Hubelement, wobei das Hubelement im ein- gefahrenen (versenkten) Zustand dargestellt ist;
- Fig. 4: eine perspektivische Ansicht eines Ausschnitts ei- ner anderen Ausführungsform der erfindungsgemässen Heizplatte.

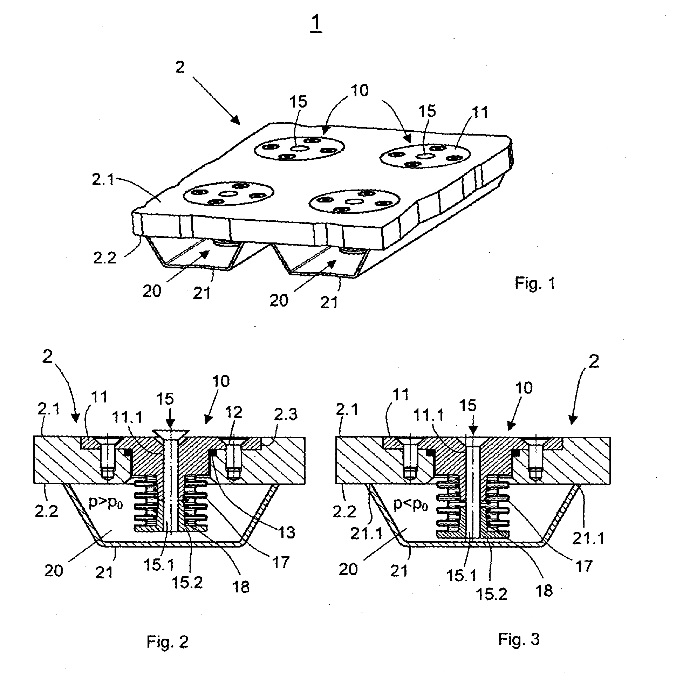

Die Fig. 1-3 zeigen verschiedene Darstellungen einer erfindungsgemässen Heizplatte 1. Die Heizplatte 1 umfasst eine heizbare Platte 2, welche auf einer (oberen) ersten Seite eine ebene Auflagefläche 2.1 für ein zu erwärmendes Werkstück aufweist.

Die Platte 2 weist im Bereich einer Oberfläche 2.2, die auf einer der Auflagefläche 2.1 gegenüberliegenden (unteren) zweiten Seite ausgebildet ist, einen Heizkanal 20 auf, der mit einer Heizflüssigkeit gefüllt ist. Wie Fig. 1 zeigt, ist der Heizkanal 20 aus mehreren Segmenten zusammengesetzt, welche im Falle des in Fig. 1 dargestellten Ausschnitts der Heizplatte 1 parallel zueinander verlaufen und einen Abstand zueinander aufweisen. Derartige Segmente können über die gesamte Oberfläche 2.2 verteilt angeordnet sein und an verschiedenen Stellen miteinander verbunden sein, sodass eine Zirkulation der Heizflüssigkeit durch den gesamten Heizkanal 20 möglich ist.

Im vorliegenden Fall ist die Oberfläche 2.2 eine ebene Fläche. Der Heizkanal 20 wird auf einer Seite durch einen Bereich der Oberfläche 2.2 und auf einer anderen Seiten durch eine Wand 21, welche im vorliegenden Fall aus einem Formteil mit trapezförmigem Profil besteht, begrenzt. Die genaue Form des Profils ist in diesem Zusammenhang nicht relevant. Es ist lediglich von Bedeutung, dass die Heizflüssigkeit in einem Teilbereich der Oberfläche 2.2 mit der Heizflüssigkeit in Kontakt steht, der gross genug ist, um einen bestimmten Wärmefluss im Rahmen vorgegebener Toleranzen zu gewährleisten.

Die Wand 21 ist an zwei Rändern 21.1 mit der Platte 2 derart verbunden, dass der Heizkanal im Bereich der Ränder 21.1 für die Heizflüssigkeit dicht ist. Die Wand 21 kann beispielsweise eine Blechkonstruktion sein. Sie kann an den Rändern 21.1 beispielsweise mit der Platte 2 verschweisst sein. Alternativ ist es möglich, die Wand 21 mit der Platte 2 zu verschrauben und gegebenenfalls abzudichten.

Wie Fig. 1-3 andeuten, umfasst die Heizplatte 1 im Bereich oberhalb des Heizkanals 20 eine Vielzahl von Modulen 10, die in Kanäle 2.3 eingesetzt sind. Die Kanäle 2.3 gehen durch die Platte 2 durch und münden an der Oberfläche 2.2 in den Heizkanal 20.

Jedes Modul 10 umfasst eine Tragstruktur 11 mit einem in der Mitte der Tragstruktur 11 ausgebildeten Führungsloch 11.1 für ein Hubelement 15. Die Kanäle 2.3 sind derart geformt, dass die Tragstruktur 11 eines Moduls 10 formschlüssig in einen der Kanäle 2.3 passt und von der Auflageseite 2.1 der Platte 2 her in den jeweiligen Kanal 2.3 eingesetzt und mit lösbaren Befestigungselementen 12 (beispielsweise Schrauben) an der Platte 2 befestigt werden kann. Wie die Fig. 1-3 zeigen, schliesst die obere Seite der Tragstruktur 11 mit der Auflagefläche 2.1 bündig ab, wenn das jeweilige Modul 10 in den Kanal 2.3 eingesetzt ist. Wie Fig. 2 zeigt, kann die jeweilige Tragstruktur 11 gegen die Platte 2 mit einem O-Ring 13 abgedichtet werden.

Wie die Fig. 2 und 3 zeigen, ist das Führungsloch 11.1 eine senkrecht zur Auflagefläche 2.1 verlaufende, durch die Tragstruktur 11 gehende Bohrung.

Die Hubelemente 15 bestehen aus einem länglichen Bolzen 15.1, dessen eines Ende im Führungsloch 11.1 in der Längsrichtung des Führungslochs 11.1 geführt ist und dessen anderes Ende in den Heizkanal 20 ragt, und aus einem Kolben 15.2, der auf diesem anderen Ende des Hubelements 15.1 sitzt und mit dem Bolzen 15.1 fest verbunden ist.

Wie die Fig. 2 und 3 zeigen, ist das jeweilige Hubelement 15 in der Längsrichtung des Führungslochs 11.1 beweglich. Gemäss Fig. 2 ist das Hubelement 15 um einen bestimmten Hub aus dem Führungsloch 11.1 ausfahrbar. Dieser Hub ist dadurch limitiert, dass die Tragstruktur 11 einen mechanischen Anschlag für den Kolben 15.2 bildet. Der maximale Hub ist deshalb erreicht, wenn der Kolben 15.2 an die Tragstruktur 11 anstösst (Fig. 2). Wie Fig. 3 zeigt, ist das Hubelement in umgekehrter Richtung (d. h. in Richtung auf den Heizkanal 20) so weit bewegbar, bis ein konisch geformter Kopf des Hubelements an die Tragstruktur 11 anschlägt. In dieser Stellung ist das Hubelement 15 derart im Führungsloch 11.1 versenkt, dass der Kopf des Hubelements 15 bündig an die Auflagefläche 2.1 grenzt (Fig. 3).

Der Kolben 15.2 ragt in den Heizkanal 15 und ist mit der Heizflüssigkeit beaufschlagt. Es besteht deshalb die Möglichkeit, den Kolben 15.2 und somit das Hubelement 15 durch eine Änderung des hydrostatischen Drucks p der Heizflüssigkeit zu bewegen.

Gemäss Fig. 1 und 2 ist der Kolben 15.2 über einen deformierbaren Balg, vorzugsweise über einen Balg 17 aus Metall, mit der Tragstruktur 11 verbunden. Der Balg 17 dichtet das Führungsloch 11.1 gegen die Heizflüssigkeit ab. Der Balg 17 kann weiterhin so ausgelegt sein, dass er in Längsrichtung des Bolzens 15.1 vorgespannt ist, und zwar bevorzugt so, dass der Balg 17 das Hubelement 15 in den eingefahrenen Zustand gemäss Fig. 3 drückt. Weiterhin ist ein Federelement 18 (Spiralfeder) zwischen der Tragstruktur 11 und dem Kolben 15.2 derart angeordnet, dass sie unter einer Druckspannung steht. Unter diesen Umständen drückt das Federelement 18 das Hubelement 15 ebenfalls in den eingefahrenen Zustand.

Die Vorspannungen des Balgs 17 und des Federelements 18 sind so gewählt, dass das Hubelement 15 bezüglich der Auflagefläche 2.1 versenkt ist, wenn der hydrostatische Druck p der Heizflüssigkeit einen vorgegebenen Wert p₀ unterschreitet (Fig. 3). Überschreitet der hydrostatische Druck p den Wert p₀ um eine vorgegebene Differenz Δp, dann erreicht das Hubelement 15 den maximalen Hub und nimmt den ausgefahrenen Zustand an (Fig. 2).

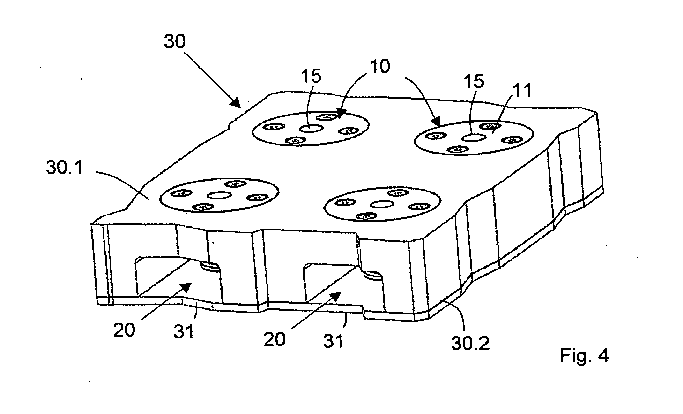

Fig. 4 zeigt eine weitere Variante der erfindungsgemässen Heizplatte, bestehend aus einer Platte 30 mit einer Auflagefläche 30.1 für ein Werkstück, mit einer Vielzahl von Modulen 10 und einem Heizkanal 20, welcher an der der Auflagefläche 30.1 gegenüberliegenden Seite 30.2 der Platte 30 ausgebildet ist. Im Unterschied zu der Ausführungsform gemäss Fig. 1-3 ist der Heizkanal 20 in einer Nut ausgebildet, die sich auf der der Auflagefläche 30.1 gegenüberliegenden Seite der Platte 30 befindet und durch eine Wand 31 abgedeckt ist. Im Unterschied zur Wand 21 ist die Wand 31 eben.

Die in den Fig. 1-4 dargestellten Ausführungsbeispiele können im Rahmen der Erfindung vielfältig modifiziert werden. Die Auflageflächen 2.1 und 30.1 müssen beispielsweise nicht unbedingt eben sein. Die heizbaren Platten 2 bzw. 30 können auch mit mehreren voneinander getrennten Heizkanälen 20 versehen sein. Es ist auch denkbar, verschiedene Teilbereiche der Auflageflächen jeweils mit Hubelementen auszustatten, die über unterschiedlich lange Distanzen bezüglich der jeweiligen Auflagefläche ausfahrbar sind.

## Patentansprüche

1. Heizplatte (1) für ein Werkstück,
mit einer heizbaren Platte (2,30), welche auf einer ersten Seite eine Auflagefläche (2.1, 30.1) für das Werkstück aufweist,
mit mehreren Hubelementen (15) zum Anheben des Werkstücks relativ zur Auflagefläche (2.1, 30.1), wobei jedes Hubelement (15) derart beweglich angeordnet ist, dass das jeweilige Hubelement bezüglich der Auflagefläche (2.1, 30.1) versenkbar und/oder bezüglich der Auflagefläche (2.1, 30.1) ausfahrbar ist, und
mit Mitteln zum Heizen
**dadurch gekennzeichnet, dass**
die Mittel zum Heizen mindestens einen Heizkanal (20) umfassen, welcher sich auf einer der Auflagefläche gegenüberliegenden zweiten Seite (2.2, 30.2) der Platte (2, 30) erstreckt und mit einer Heizflüssigkeit gefüllt ist, wobei
die Heizflüssigkeit mit der Platte (2, 30) in Kontakt steht und
die Hubelemente (15) mit der Heizflüssigkeit derart beaufschlagt sind, dass die Hubelemente (15) durch eine vorgegebene Veränderung (p-p₀) des hydrostatischen Drucks (p) der Heizflüssigkeit ausfahrbar sind.

2. Heizplatte nach Anspruch 1, wobei
das jeweilige Hubelement in einem durch die Platte durchgehenden Führungsloch angeordnet ist, welches in den Heizkanal mündet.

3. Heizplatte nach einem der Ansprüche 1 oder 2, wobei das jeweilige Hubelement eine Kolbenfläche aufweist, welche mit der Heizflüssigkeit beaufschlagt ist.

4. Heizplatte nach Anspruch 1, mit mindestens einem auswechselbaren Modul (10), welches in einen durch die Platte (2, 30) durchgehenden Kanal (2.3) eingesetzt ist, wobei das Modul (10) eine in den Kanal einsetzbare Tragstruktur (11) mit mindestens einem Führungsloch (11.1) für mindestens ein Hubelement (15) aufweist und in jedem Führungsloch (11.1) ein Hubelement (15) angeordnet ist.

5. Heizplatte nach Anspruch 4, wobei
das Hubelement (15) einen Kolben (15.2) aufweist, der mit der Heizflüssigkeit beaufschlagt ist.

6. Heizplatte nach Anspruch 5, mit
einem deformierbaren Dichtelement (17), welches eine Verbindung zwischen dem Kolben (15.2) und der Tragstruktur (11) bildet, sodass das Führungsloch (11.1) gegenüber der Heizflüssigkeit abgedichtet ist.

7. Heizplatte nach Anspruch 6, wobei
das Dichtelement (17) ein Balg aus Metall ist.

8. Heizplatte nach einem der Ansprüche 1-7, wobei das jeweilige Hubelement (15) mit einem Federelement (17, 18) verbunden ist, welches derart vorgespannt ist, dass das Hubelement (15) bezüglich der Auflagefläche (2.1, 30.1) versenkt ist, wenn der hydrostatische Druck (p) der Heizflüssigkeit einen vorgegebenen Wert (p₀) unterschreitet.

9. Heizplatte nach einem der Ansprüche 1-8, wobei
die Heizflüssigkeit im Heizkanal (20) zwischen einem Flächenbereich (2.2, 30.2) auf der zweiten Seite der Platte (2, 30) und einer an der Platte befestigten Wand (21, 31) eingeschlossen ist.

10. Heizplatte nach Anspruch 9, wobei
die Wand (21, 31) mit der Platte (2, 30) verschweisst ist.

## Claims

1. A hotplate (1) for a workpiece,
with a heatable plate (2, 30) which, on a first side, has a support surface (2.1, 30.1) for the workpiece,
with a plurality of lifting elements (15) for lifting the workpiece relative to the support surface (2.1, 30.1), wherein each lifting element (15) is movably arranged in such a manner that each lifting element is retractable with respect to the support surface (2.1, 30.1) and/or extendable with respect to the support surface (2.1, 30.1), and
with means for heating
**characterized in that**
the means for heating comprise at least one heating channel (20) which extends on a second side (2.2, 30.2) of the plate (2, 30) located opposite the support surface and which is filled with a heating fluid, wherein
the heating fluid is in contact with the plate (2, 30) and
the lifting elements (15) are pressurized with the heating fluid in such a manner that the lifting elements (15) are extendable through a predetermined change (p-p₀) of the hydrostatic pressure (p) of the heating fluid.

2. The hotplate according to claim 1, wherein
each lifting element is arranged in a guide hole passing through the plate, which guide hole opens into the heating channel.

3. The hotplate according to any one of the claims 1 or 2, wherein each lifting element has a piston face which is pressurized with the heating fluid.

4. The hotplate according to claim 1, with at least one exchangeable module (10) which is inserted in a channel (2.3) which passes through the plate (2, 30), wherein the module (10) comprises a support structure (11) which is insertable into the channel and which has at least one guide hole (11.1) for at least one lifting element (15), and a lifting element (15) is arranged in each guide hole (11.1).

5. The hotplate according to claim 4, wherein
the lifting element (15) comprises a piston (15.2) which is pressurized with the heating fluid.

6. The hotplate according to claim 5, with
a deformable sealing element (17) which forms a connection between the piston (15.2) and the support structure (11) so that the guide hole (11.1) is sealed with respect to the heating fluid.

7. The hotplate according to claim 6, wherein
the sealing element (17) is a bellows made of metal.

8. The hotplate according to anyone of the claims 1 to 7, wherein each lifting element (15) is connected with a spring element (17, 18) which is preloaded in such a manner that the lifting element (15) is retracted with respect to the support surface (2.1, 30.1) when the hydrostatic pressure (p) of the heating fluid falls below a predetermined value (p₀).

9. The hotplate according to anyone of the claims 1 to 8, wherein
the heating fluid in the heating channel (20) is enclosed between a surface region (2.2, 30.2) on the second side of the plate (2, 30) and a wall (21, 31) attached to the plate.

10. The hotplate according to claim 9, wherein
the wall (21, 31) is welded together with the plate (2, 30).

## Revendications

1. Plateau de chauffage (1) pour une pièce,
comprenant une plaque (2, 30) chauffante, qui présente sur un premier côté une surface d'appui (2.1, 30.1) pour la pièce,
plusieurs éléments de levage (15) pour le soulèvement de la pièce par rapport à la surface d'appui (2.1, 30.1), chaque élément de levage (15) étant disposé de façon mobile de telle sorte que l'élément de levage concerné peut être abaissé par rapport à la surface d'appui (2.1, 30.1) et/ou être sorti par rapport à la surface d'appui (2.1, 30.1), et
des moyens pour le chauffage
**caractérisé en ce que**
les moyens pour le chauffage comportent au moins un canal de chauffage (20) qui s'étend sur un second côté (2.2, 30.2), opposé à la surface d'appui, de la plaque (2, 30) et est rempli d'un liquide de chauffage,
le liquide de chauffage est en contact avec la plaque (2, 30) et
les éléments de levage (15) sont sollicités avec le liquide de chauffage de telle sorte que les éléments de levage (15) peuvent être sortis par une modification prédéfinie (p-pₒ) de la pression hydrostatique (p) du liquide de chauffage.

2. Plaque de chauffage selon la revendication 1, l'élément de levage respectif étant disposé dans un trou de guidage passant à travers la plaque qui débouche dans le canal de chauffage.

3. Plaque de chauffage selon l'une quelconque des revendications 1 ou 2, l'élément de levage respectif présentant une surface de piston qui est sollicitée avec le liquide de chauffage.

4. Plaque de chauffage selon la revendication 1, comprenant au moins un module (10) remplaçable, qui est inséré dans un canal (2.3) passant à travers la plaque (2, 30), le module (10) présentant une structure portante (11) pouvant être insérée dans le canal avec au moins un trou de guidage (11.1) pour au moins un élément de levage (15) et un élément de levage (15) étant disposé dans chaque trou de guidage (11.1).

5. Plaque de chauffage selon la revendication 4,
l'élément de levage (15) présentant un piston (15.2) qui est sollicité avec le liquide de chauffage.

6. Plaque de chauffage selon la revendication 5, comprenant
un élément d'étanchéité (17) déformable qui forme une liaison entre le piston (15.2) et la structure portante (11), de sorte que le trou de guidage (11.1) est rendu étanche par rapport au liquide de chauffage.

7. Plaque de chauffage selon la revendication 6, l'élément d'étanchéité (17) étant un soufflet en métal.

8. Plaque de chauffage selon l'une quelconque des revendications 1-7, l'élément de levage (15) respectif étant relié à un élément de ressort (17, 18), qui est pré-tendu de telle sorte que l'élément de levage (15) est abaissé par rapport à la surface d'appui (2.1, 30.1) lorsque la pression (p) hydrostatique du liquide de chauffage est inférieure à une valeur (pₒ) prédéfinie.

9. Plaque de chauffage selon l'une quelconque des revendications 1-8,
le liquide de chauffage étant enfermé dans le canal de chauffage (20) entre une zone de surface (2.2, 30.2) sur le second côté de la plaque (2.30) et une paroi (21, 31) fixée sur la plaque.

10. Plaque de chauffage selon la revendication 9,
la paroi (21, 31) étant soudée avec la plaque (2, 30).
